# EUROPEAN PATENT APPLICATION

(11) **EP 3 875 195 A1**
(43) Date of publication of application: **08.09.2021**
(21) Application number: 20160664.7
(22) Date of filing: 03.03.2020
(51) Int. Cl.: B23B 39/16

(54) **MACHINE FOR PRODUCING TWO OR MORE HOLES IN A SURFACE OF A PANEL**

(71) Applicant: Välinge Innovation AB, 263 64 Viken (SE)
(72) Inventor: DERELÖV, Peter, 252 84 HELSINGBORG (SE); SVENSSON, Johan, SE-265 50 Nyvång (SE)
(74) Representative: Välinge Innovation AB

(57) **Abstract**

A machine (40) for producing two or more drill holes (30, 32) in a surface (11, 12, 22) of a panel (1). The machine includes a feeding device (41) for feeding the panel in a feeding direction (42) and a drilling device (43) comprising two or more drilling units (44). The drilling units (44) are displaceable relative the surface (11, 12, 22) in a drilling direction (45) which is at an acute angle (46) relative the surface (11, 12, 22) of the panel (1).

## Description

### Field of the Invention

Embodiments of the present invention relates to a machine for producing drill holes in a panel, such as a furniture panel, configured to be a part of a locking device for locking the panel to an adjacent panel.

### Background of the Invention

A furniture product provided with a mechanical locking device disclosed, in PCT/SE2019/050801 and PCT/SE/2019/050802. The furniture comprises a first panel connected mainly perpendicular to a second panel by mechanical locking device. The mechanical locking device may comprise one or more inclined pins and a locking part.

### Summary of the Invention

It is an object of at least certain embodiments of the present invention to provide an efficient machine for producing inclined drill holes.

A further object of at least certain embodiments of the present invention is to provide a machine for producing inclined drill holes with an improved positioning tolerance and inserting dowels in the drill holes.

At least some of these and other objects and advantages that may be apparent from the description have been achieved by an aspect of the invention including a machine for producing two or more drill holes in a surface of a panel. The machine comprises a feeding device for feeding the panel in a feeding direction and a drilling device comprising two or more drilling units. The drilling units are displaceable relative the surface in a drilling direction which is at an acute angle relative the surface of the panel.

The drilling units may be linearly displaceable.

The drilling device may comprise an assembly plate, wherein the drilling units are attached to the assembly plate.

The drilling units may be displaceable relative the assembly plate by a linear motor.

The assembly plate may be displaceable relative the surface by a linear motor.

The machine may comprise a first of said drilling device which is configured for producing two or more drill holes in an edge surface of the panel.

The machine may comprise a second of said drilling device which is configured for producing two or more drill holes in a main surface of the panel.

The machine may comprise a first frame, wherein the first and/or the second of said drilling device is/are attached to the first frame.

The machine may comprise an opposite second frame, wherein another of the first and/or the second of said drilling device is/are attached to the second frame.

The second frame may be displaceable relative the first frame and guided by a guiding device.

The machine may comprise an insertion device for inserting a dowel in one or more of the more drill holes.

Each drilling unit may comprise a drill with a first diameter.

The machine may comprise a predrilling device which comprises two or more drilling units which each comprises a drill with a second diameter.

The second diameter may be greater than the first diameter.

The drilling units of the predrilling device may be displaceable relative the surface in a drilling direction which is essentially perpendicular relative the surface of the panel.

The panel may be of a rectangular shape.

The first and the second panel may comprise a wood-based core, such as HDF, MDF, plywood or a particle board.

### Brief Description of the Drawings

These and other aspects, features and advantages of which embodiments of the invention are capable of, will be apparent and elucidated from the following description of embodiments of the present invention, reference being made to the accompanying drawings, in which
FIG 1A shows an embodiment of a panel in a 3D-wiev.
FIG 1B shows an embodiment of the machine according to the invention.
FIG 2A shows an embodiment of the machine according to the invention.
FIG 2B shows an embodiment of a dowel.
FIG 3 shows an embodiment of a pre drilling device.
FIGS 4A-4B show embodiments of the machine according to the invention.
FIG 5 shows in a side view an embodiment of the machine according to the invention.
FIG 6A shows in a side view an embodiment of the machine according to the invention.
FIG 6B shows an enlarged part of the embodiment shown in FIG 6A.
FIG 7A shows in a side view an embodiment of the machine according to the invention.
FIG 7B shows an enlarged part of the embodiment shown in FIG 6A.
FIG 8 shows in a top view an embodiment of the machine according to the invention.
FIG 9 shows in a top view an embodiment of the machine according to the invention.
FIG 10 shows in a top view an embodiment of the machine according to the invention.
FIG 11 shows in a top view an embodiment of the machine according to the invention.
FIG 12 shows in a side view an embodiment of the machine according to the invention.

### Description of embodiments

Specific embodiments of the invention will now be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings, like numbers refer to like elements.

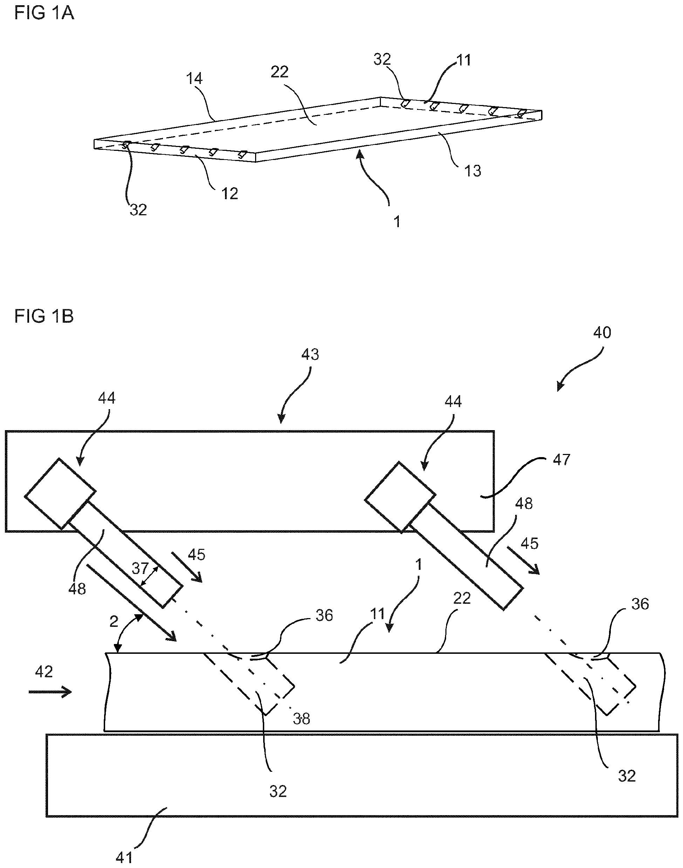

FIG 1A shows an embodiment of a panel 1 of a rectangular shape. The embodiment of the panel comprises a first edge surface 11, an opposite second edge surface 12, a third edge surface 13 which extend between the first and the second edge surface, and a fourth edge surface14 which is opposite to the third edge surface. The embodiment of the panel comprises a main surface 22, which extends between first edge surface 11 and the opposite second edge surface 12. The main surface may be essentially perpendicular to the first edge surface 11 and/or the opposite second edge surface 12.

The embodiment of the panel 1 may comprise two or more drill holes 32 in the main surface 22.

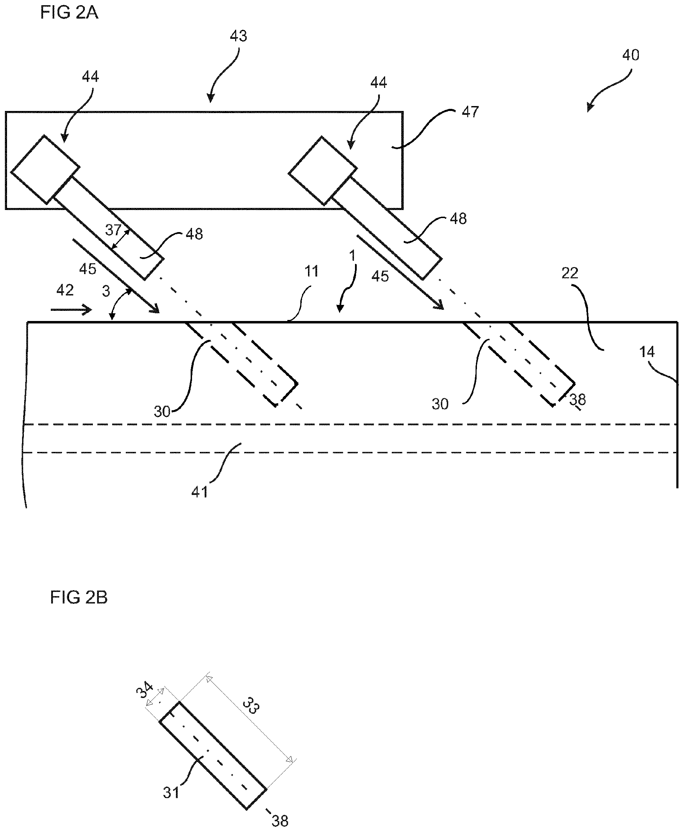

An embodiment of the panel 1 may comprise two or more drill holes 30 in the first edge surface 11 and /or in the second edge surface 12, see e.g. FIG 2A.

The panel may comprise a wood-based core, such as solid wood, HDF, MDF, plywood or a particle board. The panel may comprise a decorative surface layer, such as a veneer, a laminate layer or a thermoplastic layer.

FIG 1B shows an embodiment of a machine 40 for producing two or more drill holes 32 in a main surface 22 of an embodiment of the panel 1. The machine comprises a feeding device 41 for feeding the panel in a feeding direction 42 and a drilling device 43 comprising two or more drilling units 44. The drilling units 44 are displaceable relative the main surface 22 in a drilling direction 45 which is at an acute angle 2 relative the main surface 22 of the panel 1.

The acute angle may be defined relative the feeding direction 42.

The drilling device 43 may comprise an assembly plate 47, wherein the drilling units 44 are attached to the assembly plate 47.

The drilling units 44 may be linearly displaceable.

Each drilling unit 44 comprises a drill 48 with a first diameter 37.

FIG 2A shows an embodiment of a machine 40 for producing two or more drill holes 30 in the first edge surface 11 of an embodiment the panel 1. The machine comprises a feeding device 41 for feeding the panel in a feeding direction 42 and a drilling device 43 comprising two or more drilling units 44. The drilling units 44 are displaceable relative the first edge surface 11 in a drilling direction 45 which is at an acute angle 3 relative the first edge surface 11 of the panel 1.

The acute angle may be defined relative the feeding direction 42.

The drilling device 43 may comprise an assembly plate 47, wherein the drilling units 44 are attached to the assembly plate 47.

The drilling units 44 may be linearly displaceable.

Each drilling unit 44 comprises a drill 48 with a first diameter 37.

FIG 2B shows an embodiment of a dowel 31. The dowel 31 may be of an elongated shape and comprise a length 33 a width 34. The dowel 31 may be of a cylindrical shape with a centreline 38.

An embodiment of the dowel 31 is configured to be inserted into one or more of the drill holes in the panel 1 shown in FIG 1B or 2A. The dowel may be a part of a locking device for locking the panel 1 to an adjacent panel.

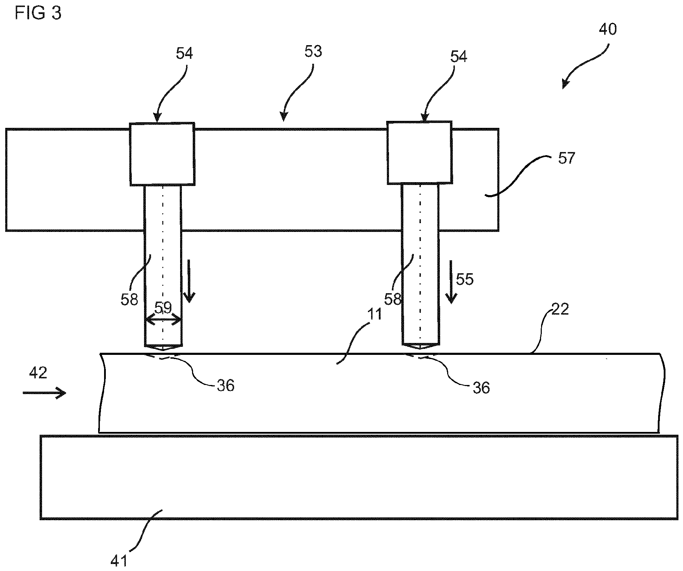

FIG 3 shows an embodiment of a predrilling device 53 which comprises two or more drilling units 54 which each comprises a drill 58 with a second diameter 59. An embodiment of the machine 40 may comprise the predrilling device 53 arranged in a position before the drilling device 43.

The drilling units 54 of the predrilling device 53 are displaceable relative the main surface 22 in a drilling direction 55 which is essentially perpendicular relative the main surface of the panel 1.

An embodiment of the predrilling device 53 may be arranged to produce pre drill holes in the first or the second edge surface 11, 12 of the panel. That embodiment may comprise drilling units 54 which are displaceable relative the first or the second edge surface 11, 12 of the panel in a drilling direction 55 which is essentially perpendicular relative the first or the second edge surface 11, 12 of the panel.

The predrilling device 53 is configured to produce two or more pre drill holes 36. The drills 48 of the drilling device may be guided by pre drill holes which may increase the positioning of the drill holes 32.

The drill holes 36 may be of a cone shape or of a cylindrical shape.

The second diameter 59 of the drill of the predrilling device 53 may be greater than the first diameter 37 of the drilling device 43. The pre drill hole 36 may be used to guide an embodiment of the dowel 31 into the drill hole 30, 32.

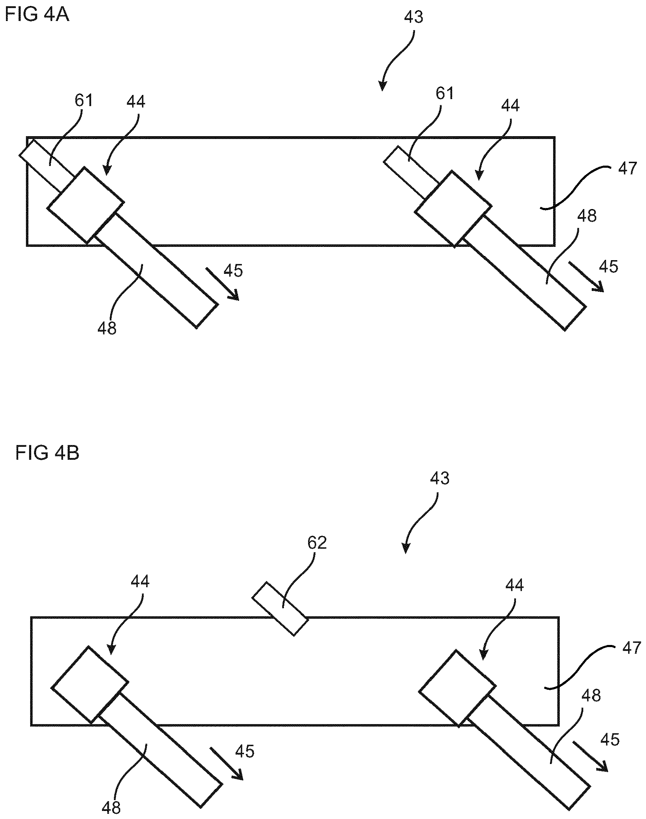

FIG 4A shows an embodiment of the drilling device 43. Each drilling unit 44 comprises a linear motor 61 for displacing the drilling unit 44 relative the assembly plate 47 in the drilling direction 45. Each drilling unit 44 may be displaced independently.

FIG 4B shows an embodiment of the drilling device 43 which comprises a linear motor 62 for displacing the assembly plate 47 in the drilling direction 45. The drilling units may be displaced jointly.

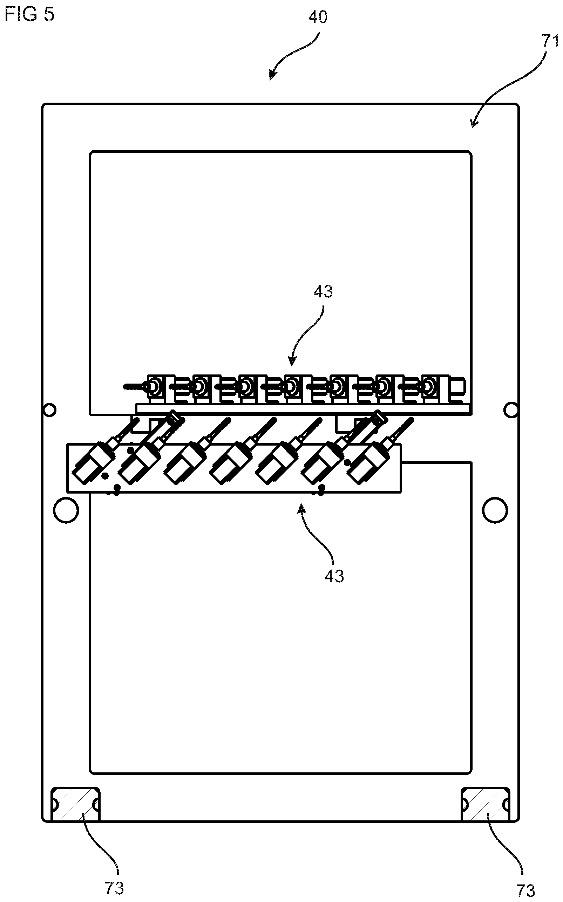

FIG 5 shows in a side view an embodiment of a machine 40 which comprises a first frame 71, wherein an embodiment of a first of said drilling device 43, which is disclosed in FIG 2A is attached to the frame 71 and an embodiment of a second of said drilling 43, which is disclosed in FIG 1B is attached to the first frame 71.

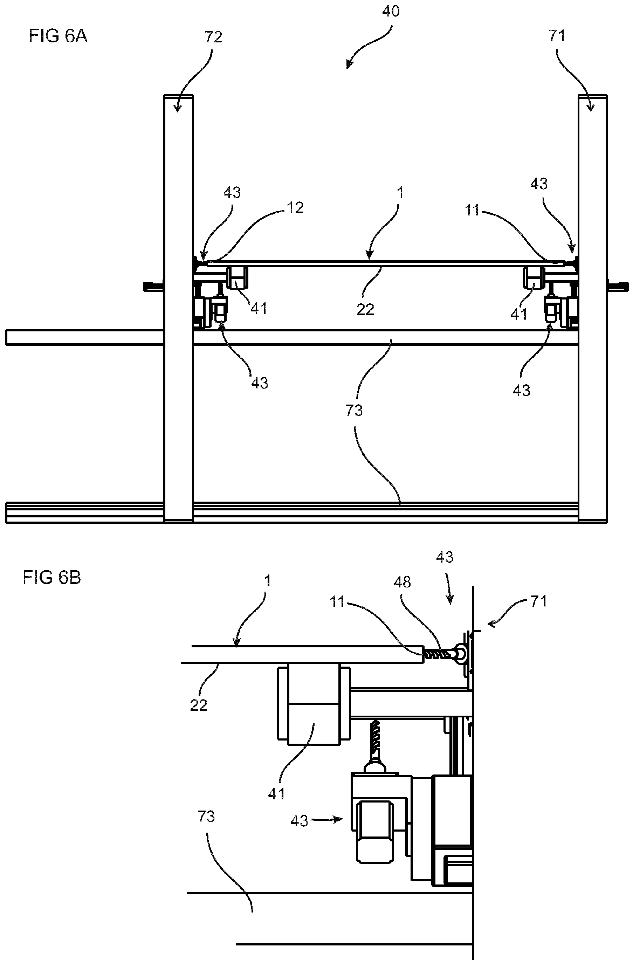

FIG 6A shows in a side view an embodiment of a machine 40 which comprises the first frame 71 and an opposite second frame 72, wherein an embodiment of another of the first of said drilling device 43, which is disclosed in FIG 2A is attached to the frame and an embodiment of another of said second of said drilling device 43, which is disclosed in FIG 1B is attached to the second frame 72.

The embodiment of the machine may be configured to produce two or more drill holes 30 in the first edge surface 11 and/or to produce two or more drill holes 30 in the second edge surface 12 of an embodiment the panel 1.

An embodiment of a first of said feeding 41 device may be attached to the first frame 71 and an embodiment of a second of said feeding 41 device may be attached to the second frame 72. An embodiment of the feeding device 41 may be a conveyor belt or chain. The machine is configured to displace the panel 1 between the first frame 71 and the second frame 72.

FIG 6B shows an enlargement of a part of the embodiment shown in FIG 6A. The figure shows the embodiment in a position during drilling drill holes in the first edge 11 of the panel 1 by drills 48.

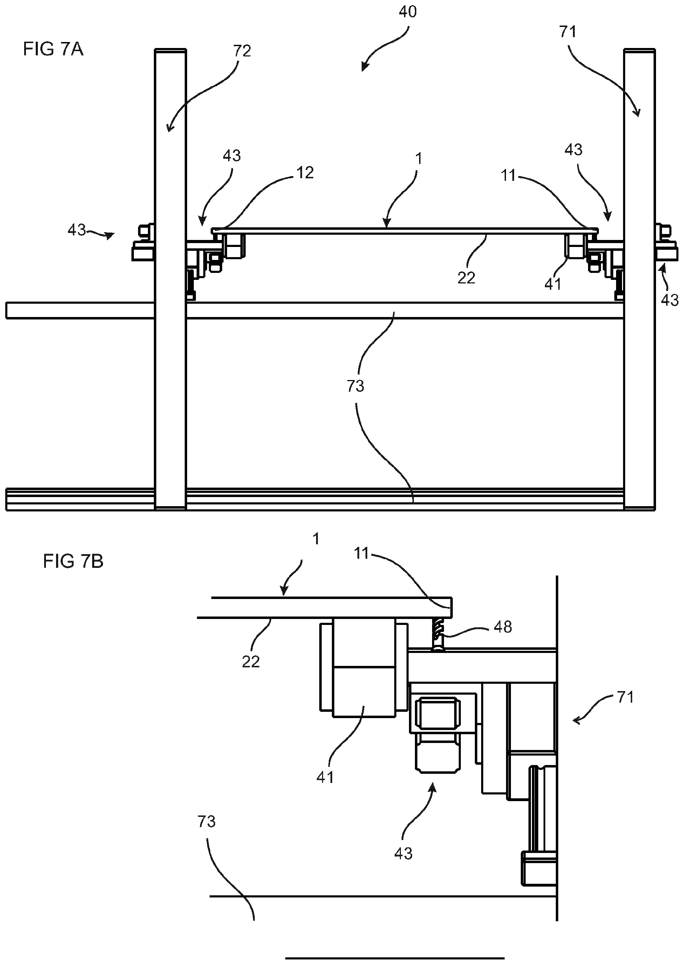

FIG 7A shows in a side view an embodiment of a machine 40 which comprises the first frame 71 and an opposite second frame 72, wherein an embodiment of another of the first of said drilling 43, which is disclosed in FIG 2A is attached to the frame and an embodiment of another of said second of said drilling 43, which is disclosed in FIG 1B is attached to the second frame 72.

The embodiment of the machine may be configured to produce two or more drill holes in the main surface 22 at the first edge 11 and to produce two or more drill holes in the main surface 22 at the second edge surface 12 of an embodiment the panel 1.

An embodiment of a first of said feeding 41 device may be attached to the first frame 71 and an embodiment of a second of said feeding 41 device may be attached to the second frame 72. An embodiment of the feeding device 41 may be a conveyor belt or chain. The machine is configured to displace the panel 1 between the first frame 71 and the second frame 72.

FIG 7B shows an enlargement of a part of the embodiment shown in FIG 7A. The figure shows the embodiment in a position during drilling drill holes in the main surface 22 at the first edge 11 of the panel 1 by drills 48.

The second frame 72 may be displaceable relative the first frame 71 and guided by a guiding device 73. The guiding device 73 may comprise a rail, such as a beam, and/or a rod.

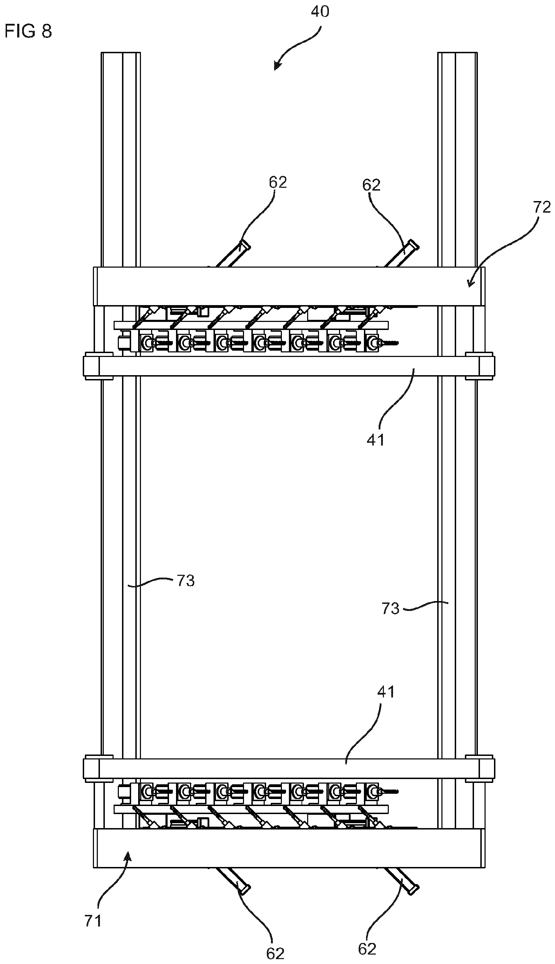

FIG 8 shows in a top view an embodiment of the machine 40 which comprises an embodiment of the first frame 71 and an embodiment of the second frame 72. The embodiment comprises two linear motors 62, at each frame, for displacing the assembly plate in the drilling direction. The embodiment is configured to displace a panel between the first and the second frame 71, 72 by an embodiment of the feeding device 41 at each of the first frame 71 and the second frame 72.

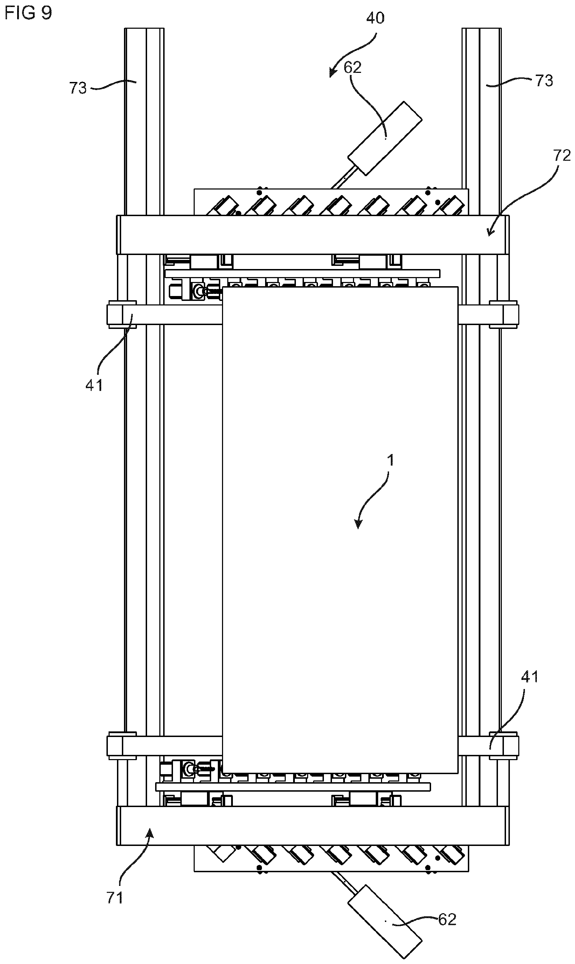

FIG 9 shows in a top view an embodiment of the machine 40 which comprises an embodiment of the first frame 71 and an embodiment of the second frame 72. The embodiment comprises a linear motor 62 at each of the first frame and the second frame 71, 72 for displacing the assembly plate in the drilling direction. The embodiment is configured to displace the panel 1 between the first and the second frame 71, 72 by an embodiment of the feeding device 41 at each of the first frame 71 and the second frame 72.

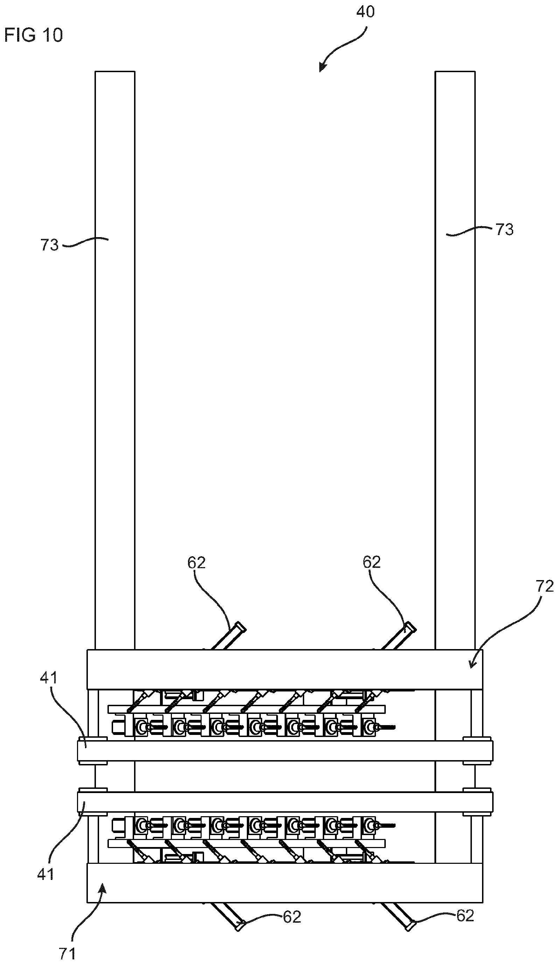

FIG 10 shows in a top view the embodiment of the machine 40 shown in FIG 8. FIG 8 shows the second frame 72 in a first position and FIG 10 shows the second frame 72 displaced to a second position which is closer to the first frame 71. The FIGS 8 and 10 shows that the same machine 40 is configured for producing drill holes in panels of different sizes.

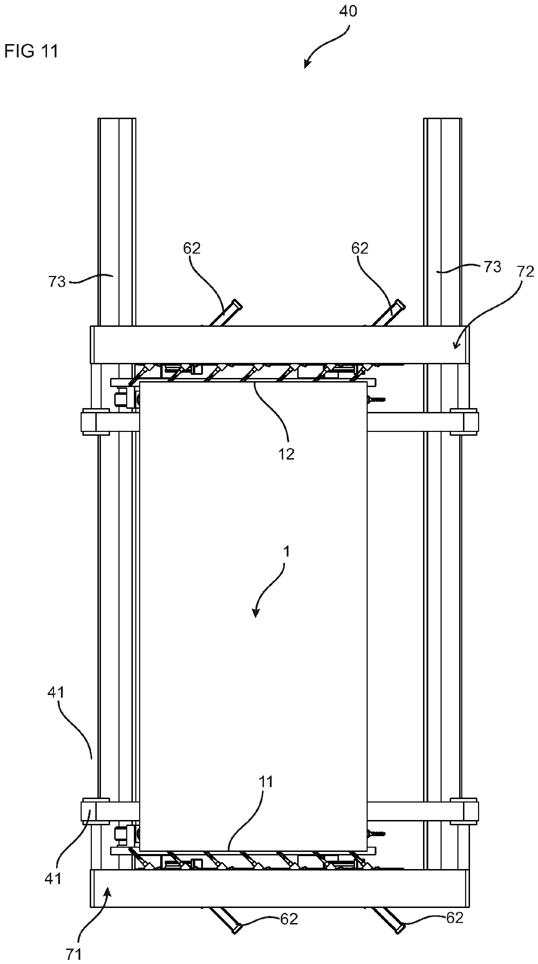

FIG 11 shows in a top view the embodiment of the machine 40 shown in FIG 8 during drilling of drill holes in the first edge 11 and in the second edge 12 of an embodiment of the panel 1. During the drilling one or more of the drilling units is/are outside the first edge 11 and the second edge 12. Thus, the same machine is configured for producing drill holes in panels of different sizes.

Embodiments of the machines shown in FIGS 5-11 may lack one or more of the drilling devices 43. Embodiments may be configured for producing only drill holes in the first and/or the second edge 11,12. Embodiments may be configured for producing only drill holes in the main surface 22 at the first and/or the second edge 11, 12.

An embodiment of the feeding device may comprise a linear motor and a gripping device for positioning and gripping the panel.

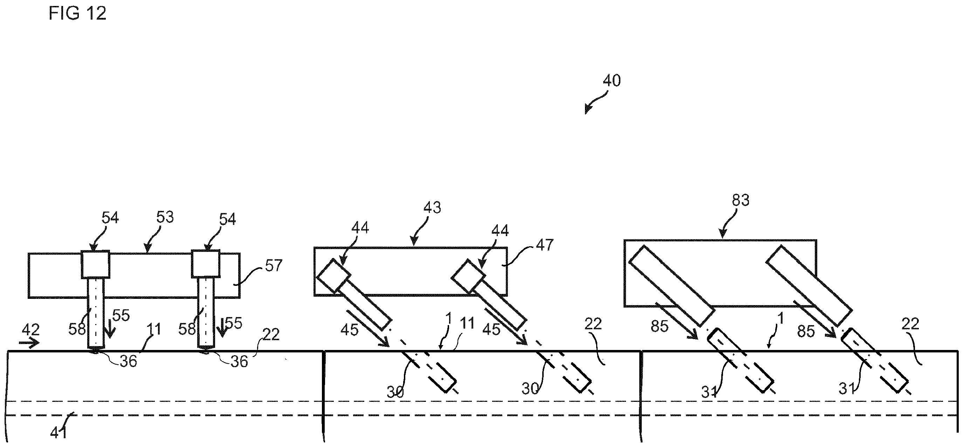

FIG 12 shows an embodiment of the machine 40 which comprises an embodiment of the pre drilling device 53 at a first position, an embodiment of the drilling device 43 at a second position and an insertion device 83 for inserting a dowel 31 in one or more of the more drill holes 30 at a third position. The dowel 31 is displaced in a displacement direction 82 which is parallel to the drilling direction 43 of the drilling device 43. The panel 1 is displaced from the first position to the third position by a feeding device 41. The insertion may be configured to apply glue in the drill holes.

## Claims

1. A machine (40) for producing two or more drill holes (30, 32) in a surface (11, 12, 22) of a panel (1), wherein the machine comprises a feeding device (41) for feeding the panel in a feeding direction (42) and a drilling device (43) comprising two or more drilling units (44), **characterized in that** the drilling units (44) are displaceable relative the surface (11, 12, 22) in a drilling direction (45) which is at an acute angle (2) relative the surface (11, 12, 22) of the panel (1).

2. The machine (40) as claimed in claim 1, wherein the drilling units (44) are linearly displaceable.

3. The machine (40) as claimed in claim 1 or 2, wherein the drilling device comprises an assembly plate (47), wherein the drilling units (44) are attached to the assembly plate (47).

4. The machine (40) as claimed in claim 3, wherein the drilling units (44) are displaceable relative the assembly plate (47) by a linear motor (61).

5. The machine (40) as claimed in claim 3, wherein the assembly plate (47) is displaceable relative the surface (11, 12, 22) by a linear motor (62).

6. The machine (40) as claimed in any one of the claims 1-5, wherein the machine comprises a first of said drilling device (43) which is configured for producing two or more drill holes (30) in an edge surface (11,12) of the panel (1).

7. The machine (40) as claimed in any one of the claims 1-6, wherein the machine comprises a second of said drilling device (43) which is configured for producing two or more drill holes (32) in a main surface (22) of the panel (1).

8. The machine (40) as claimed in any one of the claims 6 or 7, wherein the machine comprises a first frame (71), wherein the first and/or the second of said drilling device (43) is/are attached to the first frame (71).

9. The machine (40) as claimed in claims 8, wherein the machine comprises an opposite second frame (72), wherein another of the first and/or the second of said drilling device (43) is/are attached to the second frame (72).

10. The machine (40) as claimed in claims 9, wherein the second frame (72) is displaceable relative the first frame (71) and guided by a guiding device (73).

11. The machine (40) as claimed in any one of the claims 1-10, wherein the machine comprises an insertion device for inserting a dowel (31) in one or more of the more drill holes (30, 32).

12. The machine (40) as claimed in any one of the claims 1-11, wherein each drilling unit (44) comprises a drill (48) with a first diameter (37).

13. The machine (40) as claimed in claim 12, wherein the machine (40) comprises a predrilling device (53) which comprises two or more drilling units (54) which each comprises a drill with a second diameter (59).

14. The machine (40) as claimed in claim 13, wherein the second diameter (59) is greater than the first diameter (37).

15. The machine (40) as claimed in claim 12 or 13, wherein the drilling units (54) of the predrilling device (53) are displaceable relative the surface (11, 12, 22) in a drilling direction (55) which is essentially perpendicular relative the surface (11, 12, 22) of the panel (1) .
